Europäisches Patentamt

European Patent Office

Office européen des brevets

(19)

(11) Publication number: 0 436 312 A2

# EUROPEAN PATENT APPLICATION

(12)

(21) Application number: 90313253.8

(51) Int. Cl.⁵: G06F 15/20

(22) Date of filing: 06.12.90

(30) Priority: 14.12.89 US 450523

(43) Date of publication of application:
10.07.91 Bulletin 91/28

(84) Designated Contracting States:
BE CH ES FR GB IT LI

(71) Applicant: WESTINGHOUSE ELECTRIC
CORPORATION
Westinghouse Building Gateway Center
Pittsburgh Pennsylvania 15222(US)

(72) Inventor: Schreurs, Jan Jozef
3210 Cambridge Road
Murrysville, PA 15668(US)
Inventor: Forker, James Moore
3885 Brookside Drive, Unit 202
Murrysville, PA 15668(US)
Inventor: Bednar, Fred Harold
261 Emerson Road
Pittsburgh, PA 15209(US)
Inventor: Arcella, Frank Gerald
10227 Fairway Drive
Ellicott City, MA 21043(US)
Inventor: Pessall, Neil
105 Moonlight Drive
Monroeville, PA 15146(US)

(74) Representative: van Berlyn, Ronald Gilbert
23, Centre Heights
London, NW3 6JG(GB)

(54) Diagnostic expert system monitor.

(57) An online valve monitoring system senses operational characteristics of a valve and provides a diagnosis of aberrations in the characteristics. Sensor signals from the valve are transmitted to a diagnostic processor which extracts characteristic features from the sensor signals as deviations from baseline data for the valve or operational values for predetermined reference operations. An expert system applies a rule base to the characteristic features or operational values; the expert system being updated in a largely automatic process by collecting operational and maintenance data which is linked together to produce data-derived rules. Criteria are defined for comparing the data-derived rules and pre-existing rules in the rule base. All data-derived rules meeting the criteria and, if only single-valued conclusion parameters are in the rules, the pre-existing rules meeting the criteria are placed on the agenda. Each of the rules on the agenda are compared with all of the other rules or, when a multi-valued conclusion parameter is used in the criteria, with all of the pre-existing rules in a pool of rules meeting the criteria. For each pair of rules, if the conclusions conflict and the premises are not mutually exclusive (or independent if a multi-valued conclusion parameter is used in the criteria), the pair of rules are placed on a conflict list which is output to a human expert for evaluation to produce an updated rule base.

FIG.1

# DIAGNOSTIC EXPERT SYSTEM MONITOR

## CROSS-REFERENCE TO RELATED APPLICATION

This is a continuation-in-part of U.S. Patent Application Serial No. 07/397,323, filed August 22, 1989, which is a continuation of U.S. Patent Application Serial No. 07/115,069, filed October 30, 1987.

The present invention is related to a diagnostic expert system monitor and, more particularly, to a system for diagnosing the operation of valves in a complex piping network such as that found in an electrical power generating station, where rules in an expert system used to diagnose valve operation are updated based on collected maintenance data.

Recent studies funded by the Electrical Power Research Institute (EPRI) and the Nuclear Regulatory Commission (NRC) have shown that both nuclear and fossil fuel electrical generating plants are subjected to a significant number of shutdowns or outages due to valve failures, despite the fact that 30% to 50% of annual plant maintenance is devoted to valves. Other facilities such as chemical processing plants, pulp and paper plants, off shore platforms, orbiting satellite power systems and almost any nuclear powered device, including nuclear submarines, have complex piping systems which can be disrupted by valve failures. The complexity of such systems make the likelihood of valve failure during a relatively short period of time virtually inevitable.

For example, a typical electrical power plant may have 5,000 to 10,000 valves. Of these, approximately 5% to 10% are critical to maintaining production of electricity at the plant. Despite maintenance efforts, it is common for forced outages to occur every 3 to 4 months due to valve malfunctions. Furthermore, when a large valve fails, the outage may last for over three weeks.

There have been numerous efforts to avoid this situation. In order to minimize the likelihood of causing an outage, valve manufacturers commonly give extremely conservative estimates of valve life and service intervals. Electrical power companies have responded by scheduling valve maintenance or replacement which is performed regardless of whether there is any problem with the valve. These two factors combine to result in excessively high maintenance costs. Typically, 30% of annual plant maintenance is devoted to valves and at some plants as much as 50% of all maintenance is valve-related.

Despite these efforts, outages caused by valves continue to occur. A major southeast utility is recognized as having one of the best maintained nuclear power plants in the country. Yet in the early 80's, this plant experienced two weeks of forced outages per year due to valve-related causes.

There have been attempts to reduce the high cost of unnecessary maintenance while reducing forced outages caused by valve malfunctions. One attempt has been to schedule maintenance based on the statistical history of valve failures for particular valves and particular locations in the piping system. Other efforts have been directed to testing valves to determine when maintenance is required. Several different systems which attempt to meet this need are described in the November 1985 Interim Report EPRI NP-4254 for Project 2233-2.

The large number of valves which are critical to a power plant's operation and the large number of valves which require maintenance make prior art "one at a time" systems extremely inefficient. Substantial amounts of time and money are required to perform the tests on each valve and then the data must be analyzed by a human expert one valve at a time. These problems are not unique to power plants, but can be found in almost any complex piping system having large number of valves including petrochemical plants, pulp and paper plants and virtually all applications of nuclear power. When techniques are used that require test equipment to be brought to the site of the valve near a nuclear reactor, the maintenance personnel may also be exposed to unnecessary radiation.

One example of a system which overcomes many of the drawbacks discussed above is disclosed in U.S. Patent Application Serial No. 07/397,323 of which this application is a continuation-in-part. The valve monitoring system disclosed in the parent application uses an expert system to evaluate data obtained from sensors permanently mounted on, e.g., 50-150 critical valves in a complex piping system. The development, verification and maintenance of the expert system rules used in this monitoring system, like any expert system, is a time-consuming and critically important task. Any amount of automation of this task is highly desirable.

An object of the present invention is to provide an online plant operation monitoring system using an expert system rule base automatically updated by data obtained by the monitoring system and physical inspection of equipment in the plant.

Another object of the present invention is to provide a method for comparing rules in an expert system rule base to identify conflicts.

An embodiment of the present invention provides a plant operation monitoring system using radio transmission of sensor data from sensors inside a containment structure to a receiver outside the containment structure.

The above objects are attained by providing a method for comparing rules in first and second rule bases of an expert system, each of the rules containing a premise and a conclusion, said method comprising the steps of: storing the first and second rule bases; defining a criteria for conclusions to be used for conflict evaluation; forming an agenda containing all of the rules in the first and second rule bases having conclusions meeting the criteria previously defined; comparing each of the rules on the agenda with all other rules on the agenda to identify conflicting rules; and outputting the conflicting rules. The preferred method is used in an online plant operation monitoring system for monitoring operational units in a plant, comprising: sensor means for continuously sensing conditions of the operational units in the plant to produce sensor signals; data acquisition means for transmitting the sensor signals; and processing means for evaluating the sensor signals by application of an expert system rule base and for modifying the expert system rule base in dependence upon the sensor signals, where the existing expert system rule base corresponds to the first rule base and the sensor signals and data collected from physical inspection of the operational units are processed to create rules in the second rule base.

When the operational units are valves in a complex system, there are preferably at least three sensors per valve including a motor current sensor for detecting current drawn by a motor operating the valve and strain and position sensors, coupled to a valve stem in the valve, for sensing tension, compression and position of the valve stem.

These objects, together with other objects and advantages which will be subsequently apparent, reside in the details of construction and operation as more fully hereinafter described and claimed, reference being had to the accompanying drawings forming a part hereof, wherein like reference numerals refer to like parts throughout.

Fig. 1 is a block diagram of a valve diagnostic system according to the present invention;

Fig. 2 is a cross-sectional diagram of a globe valve showing the location of sensors that may be used to monitor the operation of the valve;

Fig. 3 is a flow chart of overall program flow in a valve diagnostic system according to the present invention;

Fig. 4 is a block diagram of software modules in an expert system updating method according to the present invention;

Fig. 5 is a flowchart of conflict analysis in an expert system updating method according to a first embodiment of the present invention; and

Fig. 6 is a flowchart of conflict analysis in an expert system updating method according to a second embodiment of the present invention.

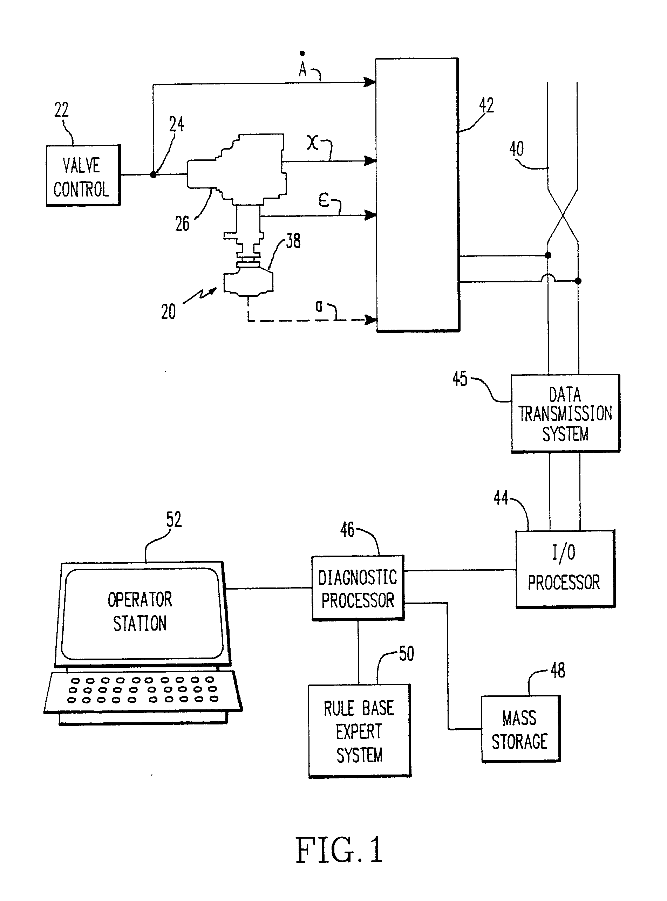

The drawbacks of the prior art are overcome by providing an online valve diagnostic system which continuously monitors valves and records aberrations in their operation. Although only one valve 20 is illustrated in Fig. 1, the number of valves which may be monitored by a system according to the present invention is limited only by the capacity of the equipment used. Thus, while a preferred embodiment will be described below, the invention is not limited to use on such equipment.

The valves which are monitored in a system according to the present invention are controlled by some remote means, indicated in Fig. 1 as valve control 22. In an electrical power generating station, typically motor operated valves (MOVs) are used and valve 20 in Fig. 1 is illustrated as an MOV. However other types of remotely controlled valves are used in other environments to which the present invention could be applied. Some of the modifications to the preferred embodiment which would be necessitated in such environments will be noted below.

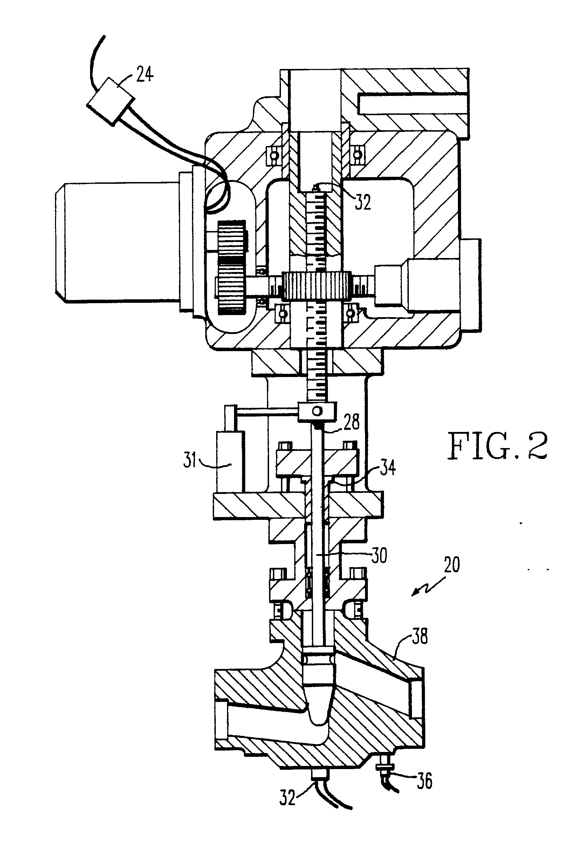

Fig. 2 is a partial cross-sectional view of a motor operated valve. Each valve monitored by a valve diagnostic system according to the present invention has sensors coupled thereto for simultaneously sensing different operational characteristics of the valve. These sensors preferably include power sensing means for providing an indication of power used by the valve. The power sensing means for an MOV may be a motor current sensor 24 for detecting current drawn by the motor 26 which actuates the valve 20. In some applications, such as variable speed valves used in petrochemical plants, a voltage or wattage sensor (not shown) is also desirable. Such a sensor would also be useful for detecting fluctuations in voltage supplied to the motor which might affect other readings. In a pneumatically controlled valve, a pressure sensor or flow meter may be used to detect the air pressure required to actuate the valve. In addition to the power sensing means 24, the valve 20 is preferably monitored by stem strain sensing means 28 for directly sensing tension and compression of the valve stem 30. In a butterfly valve, stem torque would be measured. In addition, the sensors preferably include position sensing means 31 for sensing a position of the valve stem 30 and, indirectly, travel speed.

For a small, e.g., 1.27 cm (1.5 inch), globe valve such as that illustrated in Fig. 2, in a clean and safe environment, the current sensing means may be provided by a SIMPSON Clamp Model 150 ammeter or by a current transformer, the strain sensing means by a MICROMEASUREMENTS dual bridge strain gauge attached just above the seal of the valve and the position sensing means may be a SCHAEVITZ LVDT position sensor with a travel of 5.08 cm (2 inches). In a larger valve, a resistance slide wire or lanyard-type position sensor would be preferable to reduce cost. These sensors may be replaced with other sensors, capable of making the same types of measurements, that are appropriate to the size and location of the valve being monitored.

While these three sensors in combination are capable of providing a large amount of information about a valve, additional sensors may be used to detect specific problems which occur in specific valves. For example, Fig. 2 illustrates accelerometers 32 positioned along the valve stem axis, a moisture/humidity sensor 34 at the seal surrounding the valve stem 30 and an acoustic emission transducer 36 mounted on the valve body 38. The signals produced by these additional sensors are indicated in Fig. 1 by the dashed line labeled "a", while the current, position and strain sensors are indicated in Fig. 1 by A, x, , respectively.

The sensor signals are received by data acquisition means for transmitting the sensor signals to a remote location. There are many types of data acquisition systems which may be used for this purpose; however, when the valves are in a nuclear installation, it is desirable to use a data acquisition system which has a minimum number of wires. An example of such a data acquisition system is manufactured by Westinghouse Electric Corporation. In this system, described in U.S. Patent Application Serial No. 934,238 filed November 20, 1986 and incorporated herein by reference, the main wiring path 40 consists of a coaxial cable and each of the drops 42 can handle at least four sensor signals which are frequency multiplexed and transmitted over the coaxial cable 40 together with the sensor signals from other valves to the I/O processor 44 via data transmission system 45. In the preferred embodiment, the data transmission system is a continuation of the coaxial cable 40. Alternatively, at least one radio transmitter, inside a containment structure or elsewhere in the plant and a radio receiver outside the containment structure can be used as the data transmission system 45. A mutiplexer may be used in the radio transmitter, with a demultiplexer, if necessary, in the receiver. Also, an additional receiver and transmitter at the containment wall can be used, if necessary, to act as a repeater for transmitting signals through the containment wall. Another alternative is to use a conventional intelligent data acquisition system. In other words, a data acquisition system capable of receiving commands from a diagnostic processor 46 can be used to control acquisition of data via a number of channels. The first system is preferred due to both lower cabling cost and improved isolation from noise.

Using any of the above data acquisition systems, the sensor signals from 100 to 200 critical or "key" valves can be transmitted using a single system. If the number of valves to be monitored by the valve diagnostic system exceeds the capacity of a single data acquisition system or I/O processor 44, additional signal paths 40 or I/O processors 44 can be added.

The drop or sensor processing module (SPM) 42 in the second system samples and multiplexes the sensors at a rate of 223 samples/second. The resulting signal is converted to frequency modulation on one of 128 carrier frequencies or channels. The carrier frequency is jump selectable in the SPM. In addition, power is supplied via the coaxial cable so that separate power feeds to the sensors are unnecessary. The I/O processor 44 includes a receiver that is capable of receiving any of the 128 frequencies.

As illustrated in Fig. 1, in addition to the I/O processor 44, the remaining units of the online valve diagnostic system are located at the remote location. These units include a diagnostic processor 46, mass storage unit 48, rule based expert system 50 and operator station 52. In a system monitoring a small number of valves, all five of these units may be controlled by a single processor such as the processor in a personal computer, e.g., an IBM PS2 Model 70. The following description will refer to the functional differences that are illustrated as separate blocks in Fig. 1, but may be performed on a single physical processor. Also, as noted above with respect to I/O processor 44 in a large system, a single function may be distributed over more than one physical processor.

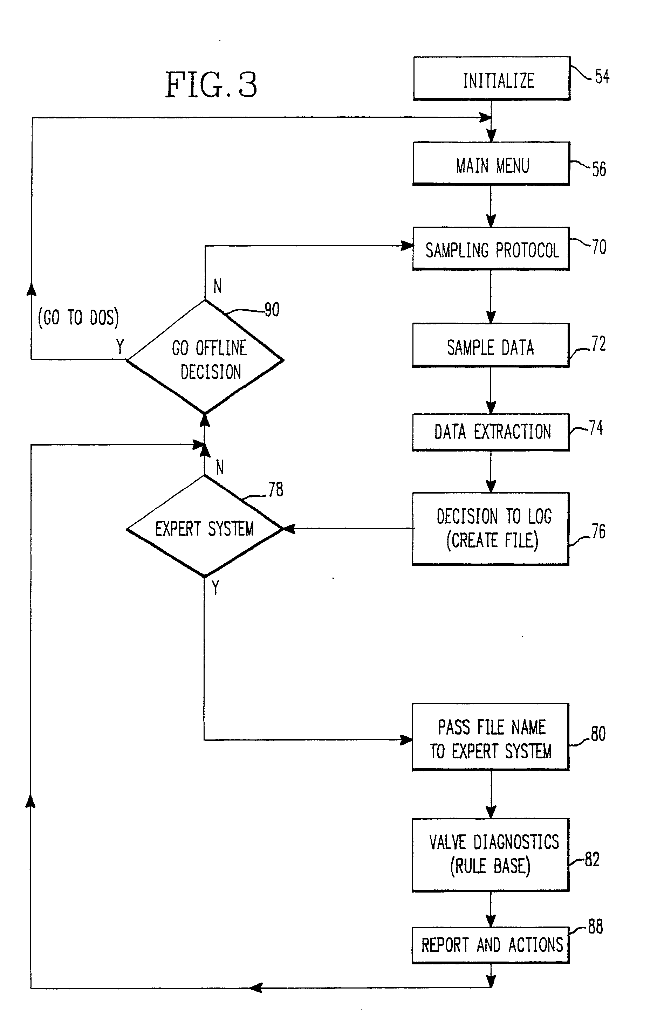

As indicated in Fig. 3, the first step 54 is to initialize the system. This step varies depending upon whether the database has been fully established, e.g., when the online valve diagnostic system is turned on after maintenance has been performed during an outage, or the system is being used for the first time at the plant. If the database has not been established, it is first necessary to configure the system by selecting an option from main menu 56. Details of database configuration can be found in co-pending U.S. patent application Serial No. 07/397,323.

Included in the system configuration is configuration of the sampling protocol 70. This protocol ensures that the less frequently actuated valves are sampled every time even if a more frequently actuated valve is being actuated at the same time. Similarly, more critical valves may have a higher sampling priority than less critical valves. This sampling protocol may be changed from the main menu 56, when, for example, a valve which is actuated relatively often is found to deteriorate rapidly so that it is desired to capture all actuations of the valve.

Second, the expert system rule base must be initialized. This process is described in detail below together with the description of the operation of the expert system.

Once the system has been configured, the flow illustrated in Fig. 3 may be followed. The main menu is displayed in step 56. One of the options on the main menu may be to select the type of rules which are to be applied to the data. One type of rules may be termed operational variation rules in which the values of the sensor signals for predetermined reference operations of the valves are compared with design basis values, determined by experts, for the predetermined reference operations. These reference operations may be opening, closing, starting to open, starting to close, finishing closing, etc. The difference between the sensor signal during one of the reference operations and the design basis values for that reference operation, which will be termed an operational variation value, is supplied to the expert system 50 where rules containing numerical values are applied to the operational variation value.

Operational variation rules must be created for each valve which can be a time-consuming process. Therefore, a more generalized type of rule uses base line data to identify dimensionless characteristic features which are supplied to the expert system 50. This technique reduces the number of rules required in the expert system rule base. Since the concept of characteristic feature extraction is more complex than the generation of operational variation values, the following description uses characteristic feature extraction as an example of detailed operation of the expert system rule base. It should be understood that the data supplied to the expert system 50 can be either dimensionless, as described below, or operational variation values having dimensions, or both. The type of data is preferably selected from a menu when beginning operation of the monitoring system. It is merely necessary to provide the appropriate rules and, if necessary, identify which type of data is being supplied so that the appropriate rules can be applied to the input data. The I/O processor 44 (Fig. 1) can be used to generate both the operational variation values and the characteristic features from the sensor signals under the control of the diagnostic processor 46 as selected by the operator from the main menu 56.

Returning to the processing flow illustrated in Fig. 3, while waiting for one of the options on the main menu 56 to be selected, the I/O processor 44 enters the loop which begins with the sampling protocol step 70. The highest priority valve being actuated at a given time is selected by the sampling protocol 70 and control passes to sample data step 72. As described above, the I/O processor 44 instructs the receiver to receive the sensor signals for the valve being sampled and this data is stored temporarily for data extraction in step 74.

The data extraction process used in the valve monitoring system is defined by the configuration database and is tailored to each valve. The first decision is to determine the type of valve that is being monitored. Basic valve types include globe valves, like that illustrated in Fig. 2, gate valves, butterfly valves, diaphragm valves, etc. Each type of valve has a generic signal "signature" which is similar for different valves and different sizes of the same type.

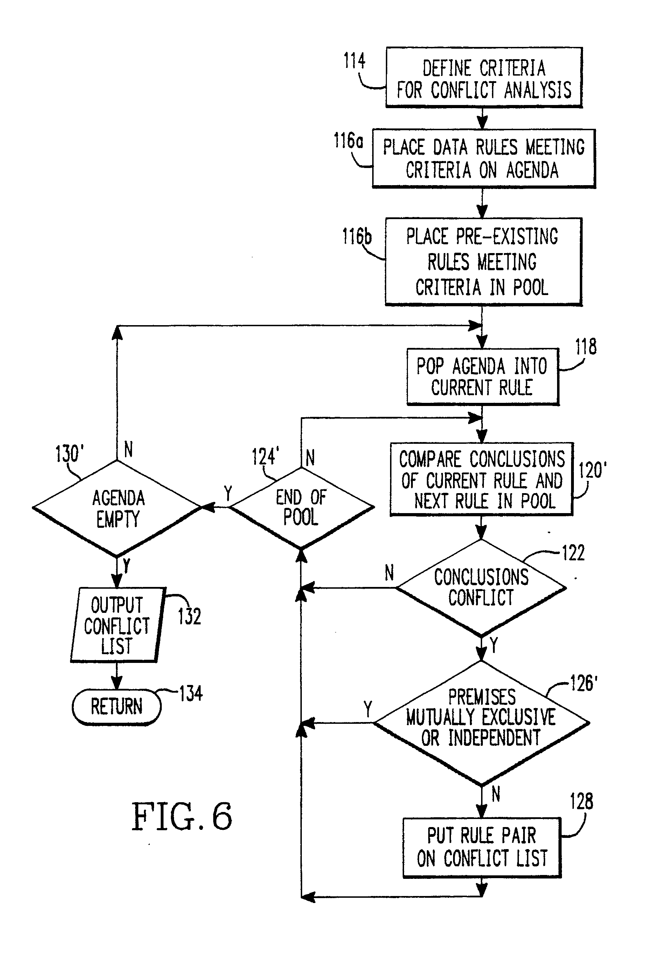

An example of a signal signature for the globe valve illustrated in Fig. 2 is illustrated in Fig. 6. The baseline data stored in mass storage 48 provides average values (features) and the standard deviation from these average values for points or regions of interest in each of the signals. The sampled signals for a valve can be scanned to locate the occurrence of peaks, such as point I1, and valleys, such as point I2, in the motor current signal even if these extreme points do not occur at the same time as those in the baseline averages. Deviations in value as well as the time of occurrence can be detected and, by comparison with the baseline data, can be used to determine the extent of deviation therefrom in response to the sensing of the operational characteristics, e.g., motor current.

For example, the standard deviations for the extreme points I1 and I2 in the baseline data can be compared with the deviations of the sampled data from the baseline data. If the deviation in the sampled data at any of the points is greater than the standard deviation, the signal may be recognized as an aberration to be passed on to the expert system for diagnosis at step 78. The standard deviation or some other appropriate measure of the proportion of the deviation of the sampled data from the baseline data is used so that characteristic features, output as processed signals from the data extraction step 74, are dimensionless. For example, the characteristic features corresponding to each point or region of interest in the sensor signals may be indicated as normal, high, very high, low or very low, depending on the relation of the sampled data for that characteristic feature to the standard deviation of the averages collected as the baseline data. This provides a significance indication for each of the characteristic features in dependence upon the magnitude of the deviations between the sensor signals and the baseline data corresponding

6

thereto.

The I/O processor 44 also includes time sensing means for providing timing of the sensor signals so that the deviation in time from the average time of occurrence of extreme points can be detected. In addition, such means permits valve stem speed to be output as a characteristic feature in dependence upon change in the position of the valve stem versus time. The characteristic features which are output as processed signals from the diagnostic processor 46 or data extraction step 74 preferably include motor current during movement and stem strain during opening and closing.

The next step in the flow diagram illustrated in Fig. 3 is to decide in decision step 76 whether to log the sensor signals based on the characteristic features output from the data extraction step 74 and decision step 76. In most cases, if the characteristic features indicate deviation from the baseline data, the extracted data will be stored. In addition, data which does not deviate a significant amount may be periodically stored in the mass storage unit 48 to provide historical data on the valve. The data which is stored may be the numerical values of all or important portions of the sensor signals, rather than the dimensionless characteristic features so that trend analysis can be performed at a later date upon the more precise numeric data.

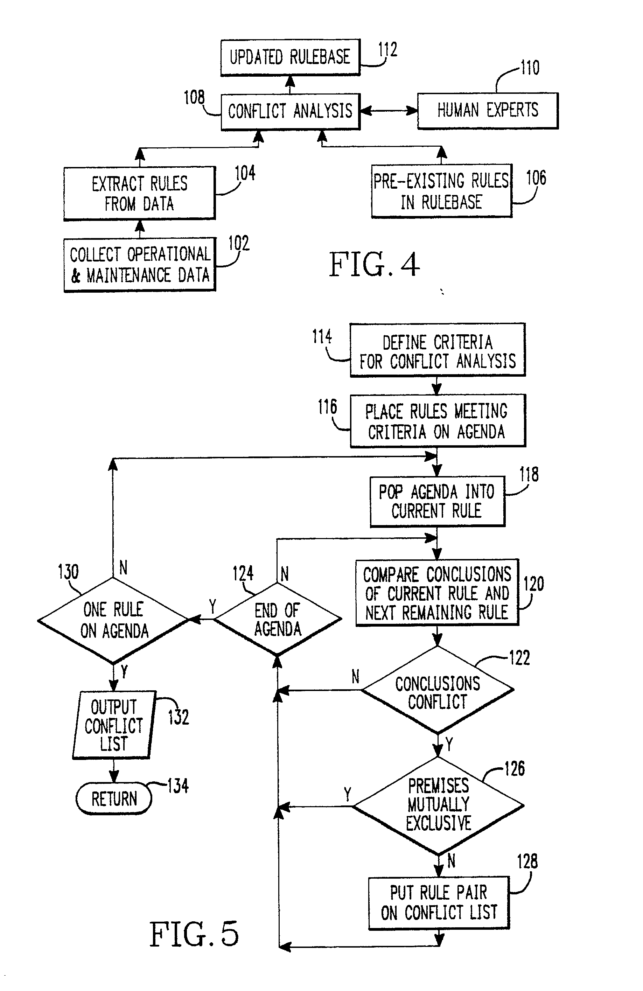

The next decision is to determine at step 78 whether the characteristic features should be passed to the expert system (module 79 in Fig. 4). Generally speaking, if there is any deviation from the baseline data, the file name of the sample data is passed in step 80 to the expert system where valve diagnostics are performed in step 82 using the rule base. As indicated in Fig. 1, the rule base expert system 50 may be a separate physical processor, but typically will be combined with the diagnostic processor 46. There are many types of expert system development packages available on the market today. For example, PERSONAL CONSULTANT PLUS (PC Plus) is an expert system development shell from Texas Instruments (TI) which will run on TI and IBM hardware.

There are many advantages to using an expert system shell, such as PC Plus, to diagnose the likely cause of the deviations from the baseline data. One of the advantages is that rules can be independent of one another which permits changes to be made easily. In addition, the inference mechanism of PC Plus and similar shell programs greatly facilitates the gathering of evidence for and against competing diagnoses. Some of the specific advantages provided by PC Plus are the ability to invoke various reasoning mechanisms based on confidence factors, the option to explain the reasoning process in English statements, the availability of active images representing the current state of the process, the ability to invoke meta-rules that can reason about the diagnostic rules and easy access to a large number of utility functions which aid in the development and maintenance of an expert system rule base and assist the user during a consultation with the system.

The rules are defined based upon laboratory tests of each type of valve. First, the baseline data, similar to that stored in mass storage 48 for each of the valves being monitored, is recorded for normal operation of the test valve. Next, typical malfunctions are simulated, based upon the numerous studies that indicate how valves in, e.g., power plants, fail. For example, a small, e.g., 0.005-inch impediment can be placed on the seat of the valve, the stem packing can be tightened and loosened from the specified value, and the position and torque limiter switch settings can be misadjusted. The deviations in the three (or more) signal traces are noted and rules can then be written based upon the deviations which are observed. In addition, a person of ordinary skill in the art of valve maintenance or design can add additional rules based upon personal knowledge (heuristic knowledge) regarding the type of malfunctions that can occur and the significance of their related sensor signals. At the end of this process, the rule base provides diagnosis means for comparing the processed signals indicating characteristic features with rules defining correspondence between known deviations and causes thereof to produce the diagnosis of the valve.

One example of a set of rules for a globe valve can be provided for the situation of "galling" or scraping of the globe into the body of the valve. Galling of the globe into the body will result in an increase in the motor drive current I4 (Fig. 6) and an increase in the compressive stem strain S7 (Fig. 6) during closing. During opening, the motor drive current will again be high and the tensile strain in the stem will also be high. These same symptoms, however, can also be caused by swelling of the packing. Swelling of the packing, on the other hand, will also be accompanied by high values for the engage current I3 and the closing pre-strain S3, when the valve is closing, or high values for the engage current and the opening pre-strain when the valve is opening. The set of rules governing the signals add and subtract confidence in a diagnosis for galling of the globe in the body and packing swelling in the manner indicated in the Appendix which contains a few rules, essentially as output from PC Plus in English.

Other relationships between causes and deviations can be provided by one of ordinary skill in the art by following the laboratory procedure and application of personal and published knowledge. For example, the studies by Haynes and Eissenberg at ORNL which are available through the Department of Energy, provide detailed information about the relationship between aberrations in motor current and malfunctions in valves. In addition, the expert system rule base may also be used applied to operational variation values instead of, or in addition to characteristic features, as described above.

The rule base may be modified initially with information provided by plant maintenance personnel when a valve monitoring system is added to an existing plant. In addition, the historical data, including frequency of maintenance and changes made when a valve is maintained, can be used to modify the rule base to reflect the history of a particular valve. In addition, changes might be made to the rules used by the analysis routines to predict the expected life of the valve.

In the preferred embodiment, rule base modification is performed in a largely automatic manner. To make modifications to the expert system rule base 50 in this manner requires that operational and maintenance data be collected 102 as illustrated in Fig. 4. This includes storing domain characteristic data capable of being input to the expert system to produce a diagnosis. The "domain" of the expert system in the present invention consists of the operational units, i.e., the valves. The characteristic data may be the unprocessed sensor signals, characteristic features extracted as described above, or operational variation values which are compared with the design basis values for the values represented by the sensor signals. The maintenance data consists of reports on physical inspection of the operational units during repair. The operational data recorded for a unit which has undergone maintenance is linked to the maintenance data.

Using the operational and maintenance data, rules are extracted 104 in the format used by the expert system. Thus, if the operational data collected in step 102 is unprocessed sensor signals, the data is processed to produce, e.g., characteristic features or operational variation values which are used to produce appropriate rules. The operational data forms the premise of a rule and the maintenance data linked thereto is used to form the conclusion of the rule. In the Appendix, the premise corresponds to the portion of each rule between "IF" and "THEN", while the conclusion follows the word "THEN".

The rules extracted in 104 constitute data-derived rules from the domain characteristic data and actual condition data. The maintenance data represents actual conditions existing in one of the operational units when the operational data was generated. The preexisting rules 106 in the rule base 50 and the rules extracted in step 104 are subjected to conflict analysis 108 which requires interaction with human experts 110. The result is an updated rule base 112.

The conflict analysis process 108 is illustrated in detail in Fig. 5 for one type of rule base and in Fig. 6 for another type. Which type of analysis is appropriate is determined by the nature of the conclusions that are drawn by the rules. In standard expert system terminology, rules have two parts. One part is the premise and the other part is the action. The premise is a statement whose truth or falsehood can be determined based on the values of certain parameters that appear in the premise. The action is a collection of commands that are executed when the premise of a rule is found to be true. One of the commands that may appear in the action of a rule is a conclude command, which instructs the inference mechanism to give certain parameters new values. Parameters that appear in a conclude command will be referred below as to conclusion parameters.

Because of the complexity of tasks that expert systems are called upon to perform, standard expert system development tools provide the developer with several types of conclusion parameters. One type is referred to as a single-valued parameter and another type is referred to as a multi-valued parameter. A single-valued parameter can logically have only one value. For example, the parameter SWITCH-POSITION may be used to describe the setting of a switch as either ON or OFF. Thus, the parameter type should be defined as single-valued because the switch cannot be both ON and OFF at the same time. A multi-valuedparameter, on the other hand, may have many values at any one time. For example, if a rule base collects evidence for a valve malfunction, a conclusion parameter POSSIBLE-MALFUNCTIONS might be defined to hold any and all malfunctions for which evidence is found. After many rules have been tried, the conclusion parameter POSSIBLE-MALFUNCTIONS may have the value defined by the list ("packing swelling", "galling of the globe into the body") which is a set of two malfunctions for which evidence was found.

As illustrated in Figs. 5 and 6, the first step required to perform a conflict analysis is to define 114 the criteria to be used. The criteria will form the basis of the analysis and determine what constitutes a conflict. For each conclusion parameter, the parameter will be checked to determine if it is of the single-valued type or the multi-valued type. The case of single-valued parameters will be discussed first.

As illustrated in Fig. 5, when conflict analysis is performed for single-valued parameters, there is no need to distinguish between pre-existing rules 106 (Fig. 4) and rules derived 104 from the data. All rules that contain a conclusion in which the single-valued parameter identified by the user in step 114 is given a value are collected and placed on an agenda. In most expert system implementations, rules are given names or identification tags and the agenda can be a list, an array, or a stack containing the identification tags. In the preferred embodiment, a stack mechanism uses PUSH and POP operations, in e.g., Personal Consultant Plus. Rules meeting the criterion that they contain the specified single-valued parameter in one of their conclusions are placed 116 onto the agenda using a PUSH operation. When the agenda is complete, the analysis proceeds by popping 118 the agenda and the popped rule becomes the current rule. If the conflict analysis is being performed on the parameter SWITCH-POSITION, for example, the current rule might conclude that the switch should be turned on, which would be represented in the expert system by the fact that the parameter is given the value ON.

When a current rule has been established, a loop is entered in which the current rule is compared with all of the rules remaining on the agenda. The first remaining rule, for example, might also set SWITCH-POSITION to the value ON, in which case the conclusions are in agreement. Therefore, a test 122 for conflict will be negative and unless there is only one rule remaining on the agenda, the test in step 124 will also be negative and the second rule on the agenda will be compared 124 next.

The second rule remaining on the agenda might set SWITCH-POSITION to the value OFF. This conclusion is in conflict with the conclusion of the current rule, which as described above sets the same single-valued parameter to ON. In this case the test in step 122 is positive and a test 126 is made on analysis of the premises of the two rules. If the expert system can determine that the two premises cannot be true simultaneously, the pair of rules under investigation can safely reside together in the same expert system and flow passes to step 124. When the premises are not mutually exclusive, the tags or identifiers for both rules are put 128 on a list of conflict pairs for future reference. Next, the test 124 for the end of the agenda is made and analysis of the current rule continues until the end of the agenda has been reached.

When the end of the agenda is reached, a new current rule is established by popping the agenda. If the agenda is left empty after the pop operation, i.e., if only one rule is on the agenda (step 130) no further analysis is necessary and the conflict analysis is finished for this particular conclusion parameter. The list of rule pairs in the conflict list is output 132 to the user and either the analysis continues for the next conclusion parameter, of the program returns 134 control to another part of the system.

When the user requests a conflict analysis for a conclusion parameter that the system recognizes as a multi-valued parameter, a distinction must be made between pre-existing rules 106 and rules derived 104 from the data. No longer can it be assumed that setting the conclusion parameter to different values in different rules constitutes a potential conflict. Even in the same rule, the same conclusion parameter may be given more than one value, as shown in the Appendix for rule 075. In that rule, the parameter POSSIBLE-MALFUNCTIONS is set to "galling of the globe into the body" in the first conclusion clause and to "packing swelling" in the second. The program, therefore, assumes that the pre-existing rules are free of conflicts among themselves and that the data rules are free of conflicts among themselves. The purpose of the conflict analysis in this case, illustrated in Fig. 6, is to check whether the rules derived from the data are in conflict with pre-existing rules.

The rules derived 104 from the data are based on actual maintenance records matched with the historical record of sensor signal features. These data are analyzed for defining 114 one possible malfunction at a time. As an example, the criteria for conflict analysis may start with selecting the multi-valued parameter POSSIBLE-MALFUNCTIONS. The user may then specify a malfunction of interest from a list of all the malfunctions for which rules exist in the rule base. This list of malfunctions is preferably presented to the user as a menu from which only one item can be selected. In the following discussion, it will be assumed that the user selected the value "packing swelling".

If rules are not extracted 104 for all data beforehand, the data pertaining to packing swelling is analyzed to build data rules. Some of the data rules will conclude that no packing swelling occurred for certain values of sensor features and others will conclude that packing swelling did occur for certain values of sensor features. The data rules are then placed 116a on the agenda and all pre-existing rules that set the parameter POSSIBLE-MALFUNCTIONS to "packing swelling" are placed 116 in a separate pool of pre-existing rules to be checked, henceforth referred to as the pool.

From here on, the analysis proceeds as for single-valued conclusion parameters, except that the agenda of data rules is compared only with pre-existing rules in the pool. When the current agenda rule concludes that "packing swelling" does not occur and the next rule in the pool concludes that "packing swelling" will occur, a potential conflict exists 122 and the premises of the two rules are compared. If the premises are not mutually exclusive the rule pair is placed 128 on the conflict list. The analysis proceeds until step 130 determines that the agenda is empty.

The Appendix lists a set of rules, where rules 095, 096, 097 and 098 are derived from the data. These rules constitute the agenda in the following example. In the pool, pre-existing rules 066, 068 and 075 are collected. The analysis to be performed concerns the conclusions regarding "packing swelling" as a value for POSSIBLE-MALFUNCTIONS.

In the preferred embodiment the conclusion is represented by an array for each of the pre-existing and data-derived rules where each element of the array has a value representing a confidence factor in a corresponding diagnosis. Thus, if there are 25 possible diagnoses each array will have 30 elements, most of which will be zero. An example of such an array is given below.

0 0 0 0 0 0 0 0 0 0 0 0 0 0 0 0 0 0 0 0 0 0 0 50 0 50 0 0

The above string could represent the conclusion of rule 068 in the Appendix which states that there is a 50% likelihood of galling of the globe into the body of a valve and a 50% chance of packing swelling. The following array could represent the conclusion of rule 097 indicating that there is a 60% likelihood that packing swelling is not a possible cause.

0 0 0 0 0 0 0 0 0 0 0 0 0 0 0 0 0 0 0 0 0 0 0 0 0 -60 0 0

In other words, the values in each element of the array are preferably integers between -100 and 100, where -100 represents that the corresponding diagnosis is certainly false, 100 represents that the corresponding diagnosis is certainly true, and 0 indicates that the corresponding diagnosis is unrelated to the premise of a corresponding rule represented by the array.

The agenda contains at least the premise of all of the rules placed 116 on the agenda and either the conclusion or a numerical array representing the conclusion. The process of comparing the rules on the agenda involves popping 118 the top rule from the agenda for use as a current rule. It will be assumed that the rules in the Appendix are in the pool and on the agenda in numerical order. Thus, rule 095 will be the first current agenda rule and rule 066 will be the first (next) rule in the pool.

First, the conclusions are compared 122 to determine if there is any conflict. When rule 095 is the current agenda rule and rule 066 is the next (actually the first) rule in the pool, the comparison in step 122 will result in a finding of no conflict even though the conclusions conflict, because the premises are independent. In the preferred embodiment using numerical arrays to represent the conclusions, the elements in the array corresponding to the diagnosis of "packing swelling" will be compared, one will be a positive number (+60) and the other negative (-60). The specified diagnosis will be found to be inconsistent.

Therefore, processing will pass to step 126' where the premises will be tested. In the case of rules 066 and 095, the former includes the premise that "the motor drive current at start of motion is high", while the latter's premise is that "the motor drive current at the start of motion is not high". Thus, the premises are mutually exclusive and processing passes to step 124' to check if the end of the pool has been reached. Since the end has not been reached in the example, rule 068 will become the next rule in the pool to be compared 120'. This loop will be repeated until rule 075 becomes the next rule in the pool compared in step 120'.

The conclusion of rule 095 is contradictory to that of rule 075, i.e., one says that packing swelling is not a possible cause and the other says it is a possible cause; therefore, a second comparison will be performed to determine 126' whether the premises are mutually exclusive or independent. In the example in the Appendix, rule 075 states that the valve motion is closing and the closing drag is high, while rule 095 states that the motor drive current at the start of motion is not high. Since "start of motion" is an instant in time, it does not refer to the same time period as "valve motion is closing"; therefore, the premises are independent and processing will pass to step 124'.

Rule 075 is the last rule in the pool, so processing passes to step 130' to determine whether the agenda is empty. Since rules 066 and 068 remain on the agenda, processing passes to step 118. Thus, rule 096 is popped 118 to become the current agenda rule and the conclusion of rule 096 is compared with the conclusions of rules 066, 068 and 075, in order. Since the conclusions of all of these rules are the same, i.e., a possible cause is packing swelling, steps 120', 122 and 124' are executed in order until processing passes to step 130' where it will be determined that the agenda is not empty.

Next, rule 097 will be popped 118 to become the current agenda rule in step 120'. As in the case of rule 095, it will be determined 122 that the conclusion of rule 097 conflicts with all of the conclusions in the pool. However, in the case of rule 097, the valve motion is closing as in rule 066. The second condition in the premise of rule 097 is that the compression peak in the stem before motion starts is not high. Although this premise clause is not mutually exclusive with the premise of rule 066, it is independent. Similarly, the premises of rules 068 and 075 will be determined to be independent of the premise of rule 097. When the end of the pool 124' is reached, it will be determined that the agenda is not empty in step 130'.

Since the end of the agenda has not been reached, rule 098 will be popped 118 to become the current agenda rule. As in the case of rules 095 and 097, the conclusion of rule 098 conflicts with the conclusions of rules 066, 068 and 075, but the premise of rule 098 is independent of the premises of rules 066 and 068, so that there is no conflict. However, the premise of rule 098 is the same as the premise of rule 075. Therefore, the rule pair 075 and 098 will be put 128 on the conflict list. After rules 075 and 098 are put 128 on the conflict pair list, it will be determined 124' that the end of the pool has been reached and it will be determined 130' that the agenda is empty.

If the original agenda consisted of the rules in the Appendix, the only rule pair on the conflict list will be 075-098. This rule pair and any others that are put 128 on the conflict list can, for example, be displayed one pair at a time to a human expert or experts 110 for evaluation to determine whether there is a real conflict and whether one or both of the rules should be edited or deleted. The result of this interactive process is an updated rule base 112, as illustrated in Fig. 4.

As should be apparent, in the case of single-valued conclusion parameters, the premise clauses must all be ANDed (only subclauses may be ORed) and if at least one premise clause in each of the two rules being compared are mutually exclusive, there is no conflict. In the case of rules having multi-valued conclusion parameters, the premise clauses of two rules being compared are checked to see if the same sensor feature is used in at least one premise clause in each of the rules. If not found, the rules are considered independent, while if a premise clause with the same sensor feature is found in each of the rules being compared, the rule pair is placed on the conflict list when the conclusions conflict, unless the corresponding premise clauses are mutually exclusive.

In addition to the three sensors described in the preferred embodiment, other sensors may be desirable for particular valves or particular applications. For example, a piezoelectric acoustic emission transducer 36 may be added to detect flow related problems inside the valve. Acoustic emission transducers are also capable of providing information regarding dry or tight packing, gear damage and mechanical wear, as known in the art. A resistive humidity/moisture detector 30, such as Panametrics hygrometer probe conditioned by a Panametrics Model 2100 hygrometer, may be used to detect leakage around the valve stem seal. In some valves, it may be desirable to include one or more high temperature piezoelectric accelerometers 32, such as an Endevco Model 2225. However, most information provided by accelerometers duplicates that which is provided by the motor current sensor 24.

In the preferred embodiment, the diagnostic system is applied to valves. However, with relatively minor modifications, the system can be used to monitor other operational units in a plant. For example, the motor current sensor system developed by Haynes and Eissenberg at ORNL was applied to other types of motors, such as a vacuum pump motor. Based upon the data derived from this study or by performing laboratory tests such as those described above for valves, an online plant operation monitoring system according to the present invention would include sensor means for continuously sensing conditions of operational units including, e.g., motor operated valves, pumps, snubbers, control rod drives, etc. In such a system, the sensor signals would be processed to extract characteristic features of each of the operational units based upon classification (in "frames" of rules), not merely by type of valve, but first by type of equipment. The rule base frames could easily be expanded to handle additional types of equipment without significantly affecting the rule frame for valves. Thus, the modularity of the monitoring system's design permits not only modifying the rules and signal processing separately and easily adding additional valves, but also expanding the monitoring system to cover different types of operational units in a plant.

The many features and advantages of the present invention are apparent from the detailed specification and thus, it is intended by the appended claims to cover all such features and advantages of the system which fall within the true spirit and scope of the invention. Further, since numerous modifications and changes will readily occur to those skilled in the art, it is not desired to limit the invention to the exact construction and operation illustrated and described. Accordingly, all suitable modifications and equivalents may be resorted to falling within the scope and spirit of the invention.

IDENTIFICATION OF REFERENCE NUMERALS USED IN THE DRAWINGS

| LEGEND | REF. NO. | FIGURE |
|---|---|---|
| VALVE CONTROL | 22 | 1 |
| I/O PROCESSOR | 44 | 1 |
| DATA TRANSMISSION SYSTEM | 45 | 1 |
| DIAGNOSTIC PROCESSOR | 46 | 1 |
| MASS STORAGE | 48 | 1 |
| RULE BASE EXPERT SYSTEM | 50 | 1 |
| OPERATOR STATION | 52 | 1 |
| INITIALIZE | 54 | 3 |
| MAIN MENU | 56 | 3 |
| SAMPLING PROTOCOL | 70 | 3 |
| SAMPLE DATA | 72 | 3 |
| DATA EXTRACTION | 74 | 3 |
| DECISION TO LOG (CREATE FILE) | 76 | 3 |
| EXPERT SYSTEM | 78 | 3 |
| PASS FILE NAME TO EXPERT SYSTEM | 80 | 3 |
| VAVLE DIAGNOSITCS (RULE BASE) | 82 | 3 |
| REPORT AND ACTIONS | 88 | 3 |
| GO OFFLINE DECISION | 90 | 3 |
| COLLECT OPERATIONAL & MAINTENANCE DATA | 102 | 4 |
| EXTRACT RULES FROM DATA | 104 | 4 |
| PRE-EXISTING RULES IN RULEBASE | 106 | 4 |
| CONFLICT ANALYSIS | 108 | 4 |
| HUMAN EXPERTS | 110 | 4 |
| UPDATED RULEBASE | 112 | 4 |
| DEFINE CRITERIA FOR CONFLICT ANALYSIS | 114 | 5 |
| DEFINE CRITERIA FOR CONFLICT ANALYSIS | 114 | 6 |

## IDENTIFICATION OF REFERENCE NUMERALS USED IN THE DRAWINGS

| LEGEND | REF. NO. | FIGURE |
|--------|----------|--------|
| PLACE RULES MEETING CRITERIA ON AGENDA | 116 | 5 |
| PLACE DATA RULES MEETING CRITERIA ON AGENDA | 116A | 6 |
| PLACE PRE-EXISTING RULES MEETING CRITERIA IN POOL | 116B | 6 |
| POP AGENDA INTO CURRENT RULE | 118 | 5 |
| POP AGENDA INTO CURRENT RULE | 118 | 6 |
| COMPARE CONCLUSIONS OF CURRENT RULE AND NEXT REMAINING RULE | 120 | 5 |
| CONCLUSIONS CONFLICT | 122 | 5 |
| CONCLUSIONS CONFLICT | 122 | 6 |
| END OF AGENDA | 124 | 5 |
| PREMISES MUTUALLY EXCLUSIVE | 126 | 5 |
| PUT RULE PAIR ON CONFLICT LIST | 128 | 5 |
| PUT RULE PAIR ON CONFLICT LIST | 128 | 6 |
| ONE RULE ON AGENDA | 130 | 5 |
| OUTPUT CONFLICT LIST | 132 | 5 |
| OUTPUT CONFLICT LIST | 132 | 6 |
| RETURN | 134 | 5 |
| RETURN | 134 | 6 |

## APPENDIX

Rule 066

IF      1)    the valve motion is closing, and
        2)    the motor drive current at start of motion   is
   high,
THEN    1)    there is  suggestive evidence (60%) that one
              of the possible causes is packing swelling.


Rule 068

IF      1)    the motor drive current at the start of
motion is high,
THEN    1)    there is suggestive evidence (50%) that one
              of the  possible causes is galling of the
              globe into the body, and
        2)    there is suggestive evidence (50%) that one
              of the possible causes is packing swelling.


Rule 075

IF      1)    the valve motion is closing, and
        2)    the closing drag is high,
THEN    1)    there is weakly suggestive evidence (40%)
              that one  of the possible causes is galling of
          the globe into the body, and
        2)    there is suggestive evidence (60%) that one
              of the possible causes is packing swelling.


Rule 095

IF      1)    the motor drive current at the start of
motion is not high,
THEN    1)    there is suggestive evidence (60%) that one
         of the possible causes is not packing         swell-
ing.

14

**Rule 096**

```
IF    1)  the valve motion is closing, and
      2)  the compression  peak in the stem before
          motion starts is high,
THEN  1)  there is suggestive evidence (60%) that one  of
the possible causes is packing swelling.
```

**Rule 097**

```
IF    1)  the valve motion is closing, and
      2)  the compression peak in the stem before
          motion starts is not high,
THEN  1)  there is suggestive evidence (60%) that one   of
the possible causes is not packing           swelling.
```

**Rule 098**

```
IF    1)  the valve motion is closing, and
      2)  the closing drag is high
THEN  1)  there is suggestive evidence (60%) that one  of
the possible causes is not packing          swelling.
```

**Claims**

1. An online plant operation monitoring system for monitoring operational units (20) in a plant, comprising: sensor means (24, 28, 31) for continuously sensing conditions of the operational units (20) in the plant to produce sensor signals; data acquisition means (40, 42, 45) for transmitting the sensor signals; and processing means (44, 46, 48, 50) for evaluating the sensor signals by application of an expert system rule base, characterized by:
   modification means (46) in said processing means (44, 46, 48, 50) for modifying the expert system rule base in dependence upon the sensor signals.

2. An online plant operation monitoring system as recited in claim 1, further characterized by said data acquisition means comprising:
   at least one radio transmitter (45), operatively connected to at least one of said sensor means (42), for receiving the sensor signals from the at least one of said sensor means (42) and transmitting radio signals containing the sensor signals; and
   a radio receiver (45), operatively connected to said processing means (44, 46, 48, 50), for receiving the radio signals and supplying the sensor signals to said processing means (44, 46,48, 50).

3. An online plant operation monitoring system as recited in claim 2, wherein the plant includes a containment structure substantially enclosing the at least one sensor means (42) and said radio transmitter (45), and wherein said radio receiver (45) and said processing means (44, 46, 48, 50) are outside the containment structure.

4. An online plant operation monitoring system as recited in claim 2, wherein said radio transmitter (45) comprises multiplexer means (45) for multiplexing the sensor signals prior to the generation of the radio signals.

5. An online valve monitoring system as recited in claim 2, wherein said radio transmitter (45) and said radio receiver (45) use frequency modulation.

6. An online plant operation monitoring system as recited in claim 1,
wherein said processing means (44, 46, 48, 50) is further characterized by:
valuation means (44) for determining operational values corresponding to each of the sensor signals for predetermined reference operations of the operational units (20); and
expert system means (50) for applying operational variation rules, containing design basis values, in the expert system rule base to the operational value of each of the sensor signals to provide a first diagnosis of a first malfunction capable of causing said valuation means (44) to generate the operational values, and
said modification means (46) modifies the expert system rules in dependence upon the operational values and operational variation rules.

7. An online plant operation monitoring system as recited in claim 6,
wherein said processing means (44, 46, 48, 50) further comprises characteristic feature means (46) for extracting characteristic features of the sensor signals from each of the operational units (20) by comparing the sensors signals with baseline data to determine deviations therefrom in proportion to the baseline data, whereby the characteristic features are dimensionless, and for providing a significance indication for each of the characteristic features in dependence upon the magnitude of the deviations between the sensor signals and the baseline data corresponding thereto,
wherein said expert system means (50) further evaluates the characteristic features by application of characteristic feature rules in the expert system rule base to provide a second diagnosis of a second malfunction capable of causing the deviations in the sensor signals for each operational unit (20) corresponding thereto and compares the deviations corresponding to each operational unit (20) to determine a confidence factor for the second diagnosis thereof, and
wherein said online plant operation monitoring system is further characterized by selection means (52) for selecting between application of the operational variation rules and the characteristic feature rules in said expert system means (50) for a set of the sensor signals.

8. An online plant operation monitoring system as recited in claim 7,
wherein said operational units (20) comprise valves (20) in a piping system, said valves (20) having a valve stem (30) actuated by a motor (26), and
wherein said sensor means (24, 28, 31) associated with said valves includes at least three sensors (24, 28, 31), comprising:
a motor current sensor (24) for detecting current drawn by the motor (26) operating a corresponding valve (20);
a strain sensor (28), directly coupled to the valve stem (30), for sensing strain of the valve stem (30) of the corresponding valve (20); and
a position sensor (31), coupled to the valve stem (30), for sensing a position of the valve stem (30) of the corresponding valve (20).

9. An online plant operation monitoring system as recited in claim 6, wherein the operational units (20) are valves (20).

10. A method of monitoring operational units in a plant, comprising the steps of: (a) continuously sensing (72) conditions of the operational units in the plant to produce sensor signals; (b) transmitting the sensor signals; and (c) evaluating (74, 82) the sensor signals by application of an expert system rule base, said method characterized by:
(d) modifying (108, 112) the expert system rule base in dependence upon the sensor signals.

11. A method as recited in claim 10, further characterized by:
step (c) comprising the steps of:
(c1) determining (74) an operational value corresponding to each of the sensor signals for predetermined operations of the operational units; and
(c2) applying (82) operational variation rules, containing design basis values, in the expert system rule base to the operational value of each of the sensor signals to provide a first diagnosis of a first malfunction capable of causing generation of the operational values in step (c1), and

step (d) comprising modifying (108, 112) the expert system rules in dependence upon the operational values and operational variation rules.

12. A method as recited in claim 11, further characterized by:
step (c) further comprising the steps of:
(c3) extracting (74) characteristic features of the sensor signals from each of the operational units by comparing the sensor signals with baseline data to determine deviations therefrom in proportion to the baseline data, whereby the characteristic features are dimensionless;
(c4) providing (74) a significance indication for each of the characteristic features in dependence upon the magnitude of the deviations between the sensor signals and the baseline data corresponding thereto;
(c5) evaluating (82) the characteristic features by application of characteristic feature rules in the expert system rule base to provide a second diagnosis of a second malfunction capable of causing the deviations in the sensor signals for each operational unit corresponding thereto; and
(c6) comparing (82) the deviations corresponding to each operational unit to determine a confidence factor for the second diagnosis thereof, and said method further comprising the step of (e) selecting (56) between application of the operational variation rules and the characteristic feature rules in the expert system rule base for a set of the sensor signals.

13. A method of comparing rules in first and second rule bases of an expert system, each of the rules containing a premise and a conclusion, said method characterized by:
(a) storing the first and second rule bases;
(b) defining (114) a criteria for conclusions to be used for conflict evaluation;
(c) forming (116) an agenda containing all of the rules in the first and second rule bases having conclusions meeting the criteria defined in step (b);
(d) comparing (120, 128) each of the rules on the agenda with all of the other rules on the agenda to identify conflicting rules; and
(e) outputting (132) the conflicting rules.

14. A method as recited in claim 13, wherein step (b) comprises the step of inputting (114) a single-valued parameter used in at least one of the conclusions of the rules in the first rule base,
wherein step (c) comprises the step of automatically placing (116) all of the rules in the first and second rule bases, having the single-valued parameter in the conclusion thereof, on the agenda, and
wherein step (d) comprises the step of automatically comparing (120, 128) each of the rules on the agenda with all of the other rules on the agenda to detect all conflicting pairs of rules having overlapping premises, where the single-valued parameter in the conclusion of each rule in the pairs of rules has different values.

15. A method as recited in claim 13, wherein step (d) comprises the step of identifying (128) a nonconflicting pair of rules when a condition in the premise of one of the nonconflicting pair of rules is contrary to a condition in the premise of the other rule in the nonconflicting pair of rules.

16. A method of updating pre-existing rules in an expert system rule base used to analyze a domain, each of the pre-existing rules having a premise and a conclusion, said method characterized by:
(a) storing (102) domain characteristic data capable of being input, if necessary after conversion, to the expert system to produce a diagnosis;
(b) inputting (102) actual condition data, corresponding to the domain characteristic data, indicating actual conditions existing in the domain when the domain characteristic data was generated;
(c) automatically generating (104) data-derived rules from the domain characteristic data and the actual condition data, each data-derived rule having a premise and a conclusion;
(d) defining (114) a set of conclusions for conflict evaluation;
(e) forming (116) an agenda containing all of the pre-existing rules and the data-derived rules having conclusions in the set of conclusions defined in step (d);
(f) comparing (118, 120, 122, 124, 126, 130) each of the pre-existing and data-derived rules on the agenda with all other pre-existing and data-derived rules on the agenda to identify conflicting rules; and
(g) outputting (132) the conflicting rules.

**17.** A method as recited in claim 16, wherein step (f) comprises the steps of:

(f1) popping (118) a top rule from the agenda for use as a current rule, thereby making an immediately following rule the top rule;

(f2) comparing (120) the current rule with all of the pre-existing and data-derived rules remaining on the agenda; and

(f3) repeating (124, 130) steps (f1) and (f2) until only the top rule remains on the agenda.

**18.** A method as recited in claim 16,

wherein step (d) comprises the step of inputting (114) a single-valued parameter used in at least one of the conclusions of the pre-existing rules,

wherein step (e) comprises the step of automatically placing (116) all of the pre-existing and data-derived rules, having the single-valued parameter in the conclusion thereof, on the agenda, and

wherein step (f) comprises the step of automatically comparing (120) each of the pre-existing and data-derived rules on the agenda with all of the other pre-existing and data-derived rules on the agenda to detect all conflicting pairs of rules having overlapping premises, where the single-valued parameter has different values in the conclusion of each rule in each of the pairs of rules.

**19.** A method as recited in claim 16, wherein step (f) comprises the step of identifying (126) a non-conflicting pair of rules when a condition in the premise of one of the non-conflicting rules is contrary to a condition in the premise of the other of the non-conflicting rules.

**20.** A method of comparing rules in first and second rule bases of an expert system, each of the rules containing a premise and a conclusion, said method characterized by:

(a) storing the first and second rule bases;

(b) defining (114) a criteria for conclusions to be used for conflict evaluation;

(c) forming (116a) an agenda containing all of the rules in the first rule base having conclusions meeting the criteria defined in step (b);

(d) forming (116b) a pool of all of the rules in the second rule base having conclusions meeting the criteria defined in step (b);

(e) comparing (120', 122, 124', 126', 128, 130') each of the rules on the agenda with all of the rules in the pool to identify conflicting rules; and

(f) outputting the conflicting rules.

**21.** A method as recited in claim 20,

wherein step (b) comprises the step of inputting (114) a multi-valued parameter used in at least one of the conclusions of the rules in the second rule base,

wherein steps (c) and (d) comprises the step of automatically placing (116a, 116b) all of the rules in the first and second rule bases, having the multi-valued parameter in the conclusion thereof, on the agenda and in the pool, respectively, and

wherein step (e) comprises the step of automatically comparing (120') each of the rules on the agenda with all of the rules in the pool to detect all conflicting pairs of rules having overlapping premises, where the multi-valued parameter in the conclusion of each rule in the pairs of rules has contradictory values.

**22.** A method of updating pre-existing rules in an expert system rule base used to analyze a domain, each of the pre-existing rules having a premise and a conclusion, said method characterized by:

(a) storing (102) domain characteristic data capable of being input, if necessary after conversion, to the expert system to produce a diagnosis;

(b) inputting (102) actual condition data, corresponding to the domain characteristic data, indicating actual conditions existing in the domain when the domain characteristic data was generated;

(c) automatically generating (104) data-derived rules from the domain characteristic data and the actual condition data, each data-derived rule having a premise and a conclusion;

(d) defining (114) a set of conclusions for conflict evaluation;

(e) forming (116b) a pool containing all of the pre-existing rules having conclusions in the set of conclusions defined in step (d);

(f) forming (116a) an agenda containing all of the data-derived rules having conclusions in the set of conclusions defined in step (d);

(g) comparing (118, 120', 122, 124', 126', 130') each of the data-derived rules on the agenda with all of the pre-existing rules in the pool to identify conflicting rules; and

(h) outputting (132) the conflicting rules.

23. A method as recited in claim 22, wherein step (g) comprises the steps of:

(g1) popping (118) a top rule from the agenda for use as a current agenda rule, thereby making an immediately following rule the top rule on the agenda;

(g2) comparing (120', 122, 124', 126') the current agenda rule with all of the pre-existing rules in the pool; and

(g3) repeating (130') steps (g1) and (g2) until no rules remain on the agenda.

24. A method as recited in claim 23, wherein step (g2) comprises the step of identifying (126') a non-conflicting pair of rules when a condition in the premise of the current agenda rule is contrary to a condition in the premise of one of the rules in the pool and when a condition in the premise of the current agenda rule is independent of a condition in the premise of the other of the non-conflicting rules.

25. A method as recited in claim 22,

wherein step (d) comprises the step of inputting (114) a multi-valued parameter used in at least one of the conclusions of the pre-existing rules,

wherein steps (e) and (f) comprise the steps of automatically placing (116a, 116b) all of the pre-existing and data-derived rules, having the multi-valued parameter in the conclusion thereof, in the pool and on the agenda, and

wherein step (g) comprises the step of automatically comparing (118, 120', 122, 124', 126', 130') each of the data-derived rules on the agenda with all of the pre-existing rules in the pool to detect all conflicting pairs of rules having overlapping premises, wherein the multi-valued parameter is contradictory in the conclusion of each rule in the pairs of rules.

26. A method as recited in claim 22,

wherein the conclusion in each of the pre-existing and data-derived rules includes at least one diagnosis,

wherein step (d) comprises the step of inputting (114) a specified diagnosis,

wherein steps (e) and (f) comprise the steps of automatically placing (116a, 116b) all of the pre-existing and data-derived rules, containing a reference to the specified diagnosis, on the agenda and in the pool, respectively, and

wherein step (g) comprises the step of comparing (118, 120', 122, 124', 126', 130') each of the data-derived rules on the agenda with all of the pre-existing rules in the pool to detect all conflicting pairs of rules having overlapping premises, when the specified diagnosis is inconsistent in the rules in each of the conflicting pairs of rules.

27. A method as recited in claim 26,

wherein steps (e) and (f) comprise storing (116a, 116b) an array for each of the pre-existing and data-derived rules, respectively, each element of the array having a value representing a probability that a corresponding diagnosis is true,

wherein step (d) comprises the step of specifying (114) one of the elements in each array created in steps (e) and (f), and

wherein step (g) comprises comparing (120') the values of the one of the elements in the array specified in step (d) in determining whether the specified diagnosis is inconsistent.

28. A method as recited in claim 27, wherein the value in each element of each array created in steps (e) and (f) is an integer between -100 and 100, where -100 represents that the corresponding diagnosis is certainly false, 100 represents that the corresponding diagnosis is certainly true, and 0 indicates that the corresponding diagnosis is unrelated to the premise of a corresponding rule represented by the array.

FIG.1

FIG.2

FIG.3

FIG. 4

FIG. 5

114 — DEFINE CRITERIA
FOR CONFLICT ANALYSIS

116a — PLACE DATA RULES MEETING
CRITERIA ON AGENDA

116b — PLACE PRE-EXISTING
RULES MEETING
CRITERIA IN POOL

118 — POP AGENDA INTO
CURRENT RULE

120' — COMPARE CONCLUSIONS
OF CURRENT RULE AND
NEXT RULE IN POOL

130' — AGENDA
EMPTY    N

124' — END OF
POOL    N    Y

122 — CONCLUSIONS
CONFLICT    N

Y

132 — OUTPUT
CONFLICT
LIST

Y

126' — PREMISES
MUTUALLY EXCLUSIVE
OR INDEPENDENT    Y

134 — RETURN

N

128 — PUT RULE PAIR
ON CONFLICT LIST

FIG.6